Europäisches Patentamt

European Patent Office

Office européen des brevets

(19)

(11) Publication number : **0 500 284 A1**

(12) # EUROPEAN PATENT APPLICATION

(21) Application number : **92301255.3**

(22) Date of filing : **17.02.92**

(51) Int. Cl.[5] : **G06F 13/42**

(30) Priority : **19.02.91 US 657694**

(43) Date of publication of application :
**26.08.92 Bulletin 92/35**

(84) Designated Contracting States :
**DE FR GB**

(71) Applicant : **International Business Machines
Corporation
Old Orchard Road
Armonk, N.Y. 10504 (US)**

(72) Inventor : **Cockburn, Gordon John
106 St. Blaize Road
Romsey, hants S051 7LW (GB)**
Inventor : **Irwin, John William
9011 EL Dorado Drive
Austin, Texas 78737 (US)**

(74) Representative : **Tomlinson, Kerry John
Frank B. Dehn & Co. European Patent
Attorneys Imperial House 15-19 Kingsway
London WC2B 6UZ (GB)**

(54) Method and apparatus for querying a memory system.

(57) A method and apparatus for a digital computer (100) to communicate with a memory (200) coupled to the computer including the steps of sending a command for execution to the memory, and sending a query to the memory for a status of the execution of the command. In addition, a method and an apparatus for a digital computer (100) to communicate with a memory (200) coupled to the digital computer including the steps of sending a query to the memory, and timing the length of time for the memory to respond to the query.

FIG. 1

EP 0 500 284 A1

The present invention relates generally to memory systems and more specifically to a method and apparatus for querying a memory system.

In response to a command from a digital computer, external memory systems are known to return a status code after attempting or completing the execution of the command. The status code provides an indication whether the command was properly executed or not. If not, the status code may describe what type of error occurred. Other external memory systems have been known to provide a continuous stream of status codes at regular intervals. These status codes contain information as to the current operating condition of the external memory system. If a status code is not received after a predetermined amount of time, the digital computer may reboot the memory system and retry any commands that were not executed.

The present invention provides a method for a digital computer to communicate with a memory coupled to the computer including the steps of sending a command for execution to the memory, and sending a query to the memory for a status of the execution of the command. The present invention also provides a method for a digital computer to communicate with a memory coupled to the digital computer including the steps of sending a query to the memory, and timing the length of time for the memory to respond to the query.

The present invention provides a computer system including a memory having means for executing commands, and at least one digital computer coupled to the memory, the or each computer including a means for sending a command for execution to the memory and for sending a query to the memory for a status of the execution of the command. The present invention also provides a computer system including a memory having means for executing commands, and at least one digital computer coupled to the memory, the or each computer including a means for sending a query to the memory and at least one clock coupled to the sending means for timing the length of time for the memory to respond to the query.

The present invention provides a computer system including a memory having means for executing commands, and means coupled to the memory for sending a command for execution to the memory and for sending a query to the memory for a status of the execution of the command. The present invention also provides a computer system including a memory having means for executing commands, and at least one digital computer coupled to the memory, the or each computer including a means for sending a query to the memory and at least one clock coupled to the sending means for timing the length of time for the memory to respond to the query.

A further understanding of the nature and advantages of the present invention may be realized by reference to following description and drawings of preferred embodiments of the present invention given by way of example only.

Brief Description of the Drawings

Fig. 1 is a block diagram of a digital computer utilizing a preferred embodiment of the invention;
Fig. 2 is a block diagram of a preferred internal memory shown in Fig. 1;
Fig. 3 is a detailed representation of a mailbox;
Figs. 4 and 5 are block diagrams of various configurations of digital computers in combination with various types of external memory systems;
Fig. 6 is a flow chart of a computer system executing a memory system command;
Fig. 7 is a flow chart of the digital computer determining whether all commands have been performed on a timely basis; and
Fig. 8 is a flow chart of a digital computer querying a memory system.

External memory is often shared between multiple digital computers. As a result, the length of time necessary for a memory system to execute a given command is difficult to predict. The present invention provides a way for each computer to determine whether the external memory system is functioning properly without having to wait for a previously sent command to be executed.

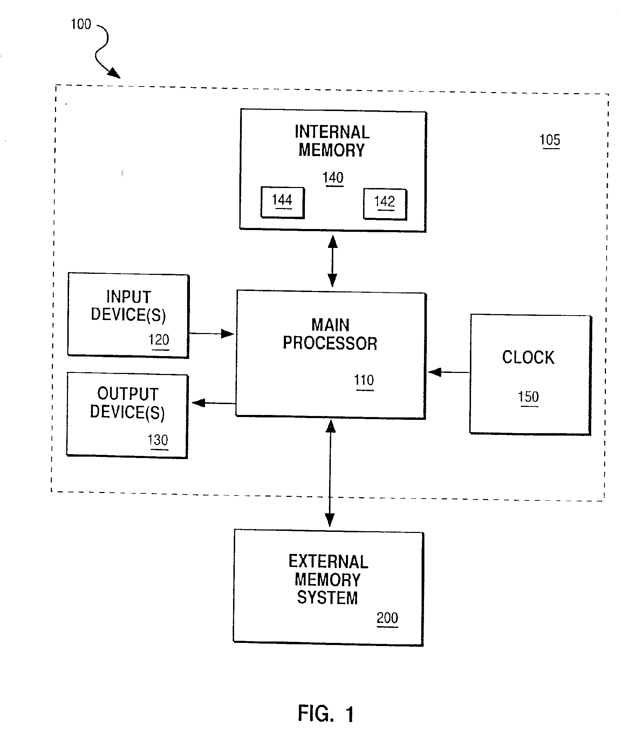

Fig. 1 is a block diagram of a computer system 100 including a digital computer 105 and an external memory system 200. The digital computer includes a main processor 110 coupled to an input device(s) 120, an output device(s) 130, an internal memory 140 and a clock 150. Input device 120 may include a keyboard, mouse, tablet or other types of input devices. Output device 130 may include a text monitor, plotter or other types of output devices. The main processor is also coupled to an external memory system 200 which contains data not stored on internal memory 140. Internal memory 140 includes space to store mailboxes 142 to facilitate communications between main processor 110 and external memory system 200. The internal memory also contains a command map 144 which contains a list of outstanding commands from the main processor to the external memory system.

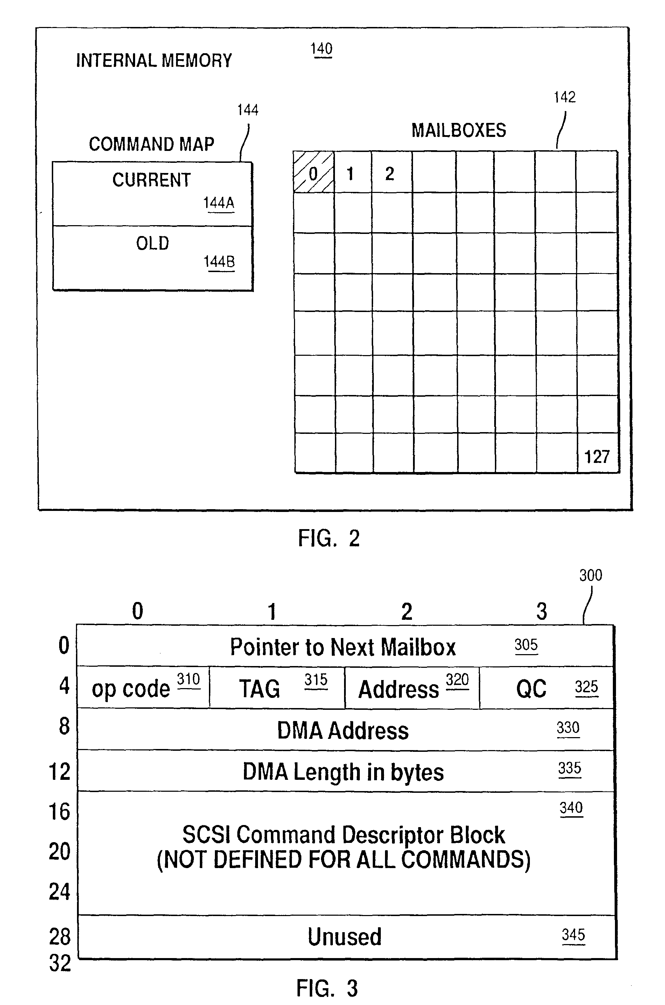

Fig. 2 is a detailed block diagram of a preferred internal memory 140 shown in Fig. 1. The internal memory includes mailboxes 142. In a preferred embodiment, mailboxes 142 includes 128 mailboxes of 32 bytes each that are coupled together by a linked list. When the main processor generates commands to the external memory system, a set of mailboxes are developed in internal memory by the main processor with one mailbox per command to be executed by the external memory system. A more detailed explanation of a mailbox will be given below, with reference to Fig.

3. Internal memory 140 also includes a command map 144. Whenever a mailbox is generated by the main processor associated with a command for execution by the external memory system, a reference to that command is placed in the current command map 144A. After a predetermined amount of time, about one minute in the preferred embodiment, the processor reads the old command map to determine if any queries are outstanding. Initially, there are no outstanding commands and the current map is copied immediately into an old command map 144B. When the main processor receives the results of a command that was executed by the external memory system, the references to that command in both the current command and old command maps are deleted. As a result, the current command map contains a listing of commands to be executed by the external memory system that are active in the external memory system at any time. In addition, the old command map contains a listing of commands to be executed by the external memory system that were active at the last copying of the current command map and are still active.

Fig. 3 is a detailed representation of a mailbox 300 contained in mailboxes 142 in the preferred embodiment. In the first four bytes of the mailbox is a pointer 305 to the next mailbox to be opened by the external memory system. In the fifth byte of the mailbox is an opcode of the command to be executed by the external memory system. If the opcode is greater than hexadecimal 80, then the external memory system sets up direct memory access (DMA) facilities using DMA address 330 and DMA length 335 and processes the SCSI command descriptor block described below. If the opcode is less than hexadecimal 80, then the remaining portions of the mailbox must be looked at, in the context of the specific opcode, to execute the command. Tag 315 is the number of the mailbox (between 1-127). Address 320 in the seventh byte of the mailbox is the address of the direct access storage device (DASD) or controller or other device such as a tape drive within the external memory system which is to execute the command. Queue control 325 gives a priority for the command given in opcode 310. In the preferred embodiment, priority can be "none" (no priority given), "ordered" (prioritize in the order received) or "head" (highest priority). DMA address 330 and DMA length in bytes 335 give the DMA address and length of the data to be operated on by the command given in opcode 310. SCSI command descriptor block 340 is a 12 byte standard command as defined by small computer system interface (SCSI) standards. Unused block 345 is reserved for future advances in the preferred embodiment.

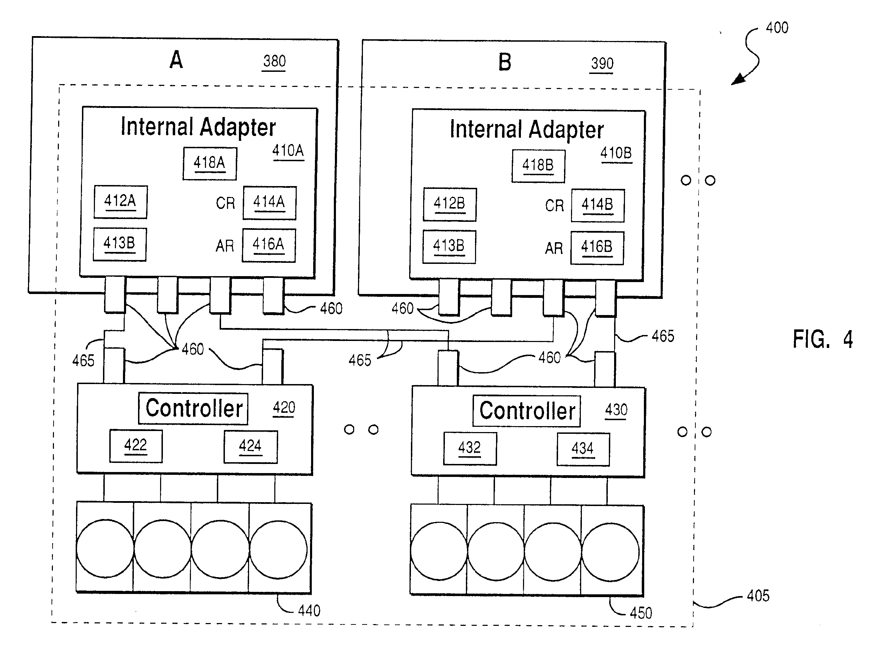

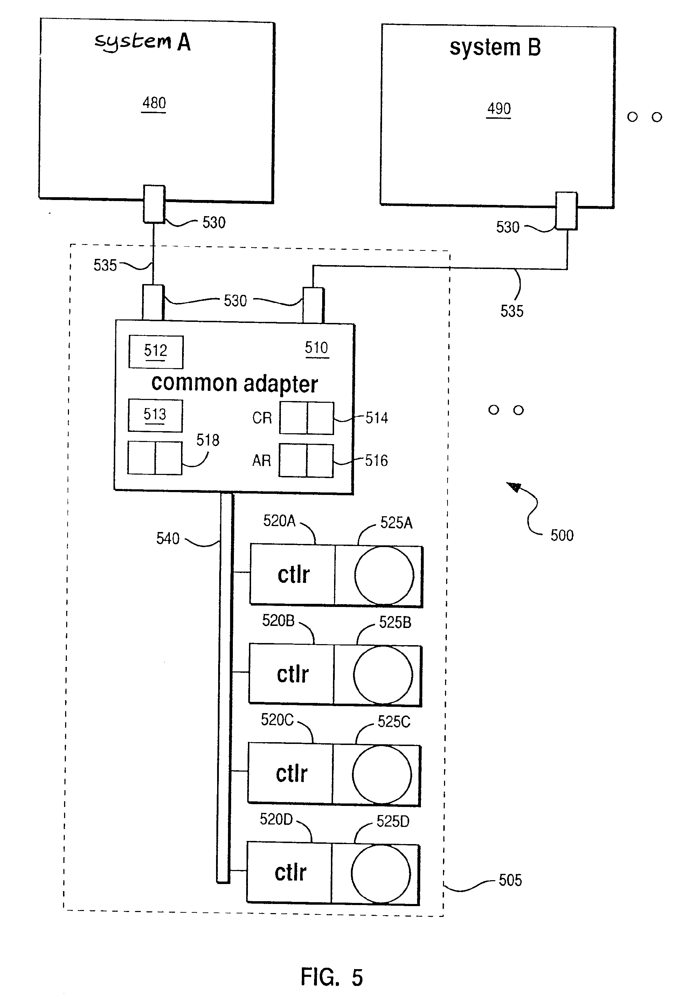

Figs. 4 and 5 give various configurations of digital computers in combination with various types of external memory systems. Fig. 4 shows a computer system 400 including two digital computers, 380 and 390, coupled to an external memory system 405. The external memory system includes internal adapters 410A and 410B in each of the respective digital computers. The external memory system also includes controllers 420 and 430 coupled to each of the internal adapters. In addition, DASD devices 440 and 450 are coupled to controllers 420 and 430, respectively. The controllers are coupled to the internal adapters via serial connectors 460 and serial transmission lines 465. The internal adapters include microprocessors 412A and 412B, completion registers (CR) 414A and 414B, alert registers (AR) 416A and 416B, and last tag registers (LTR) 418A and 418B. The completion register and alert register are four byte registers used to transfer status pertaining to command completions from the adapter to the digital computers. Alternative embodiments may put the status codes in the mailboxes in internal memory. However, the preferred embodiment puts the status in the adapter to avoid caching problems which may exist if writing to internal memory. When the adapter writes to the completion register, the appropriate digital computer is interrupted. The completion register then contains one to four mailbox tags or special codes to be read by the interrupted digital computer. If a mailbox tag is present, then that command has completed without error. If a special code is present, then the system reads the alert register to retrieve the mailbox tag and details of the error. The controllers 420 and 430 contain microprocessors 422 and 432, respectively, as well as lookahead buffers 424 and 434, respectively. Internal adapters 410A and 410B contain clocks 413A and 413B, respectively.

The internal adapters function as translators and distributors of commands and answers to those commands between the digital computers and the controllers. The internal adapters also handle other functions such as handling some error correction, timing functions, and some reset and restart commands for the controllers. The controllers 420 and 430 control the operations of the DASDs 440 and 450, respectively. In addition, the controllers handle some error correction of data and maintain multiple lookahead buffers for each DASD. Whenever a section of a DASD is read, an additional 128K bytes subsequent to the addresses of the DASD being read are also read and stored in the lookahead buffer. This is in anticipation of the next command involving the data stored in the lookahead buffer.

Fig. 5 is a block diagram of an alternative computer system 500 including two digital computers 480 and 490 coupled to external memory system 505. The external memory system includes a common adapter 510. The common adapter 510 is also coupled to controllers 520A through 520D. The computers are coupled to the common adapter with serial connectors 530 and serial communication lines 535. The common adapter is coupled to the controllers by a bus 540. The common adapter includes a microprocessor 512, clock 513, completion register (CR) 514, alert register (AR) 516, and last tag register (LTR) 518. Each of the registers is partitioned into two or more subregisters to handle multiple systems. For example, there are at least two last tag subregisters, one for digital computer 480 and another for digital computer 490. Each of the controllers is tightly coupled to DASD devices 525A through 525D.

Other alternative computer systems will be apparent to one skilled in the art. That is, additional digital computers with internal or external adapters may be coupled to the controllers shown or to additional controllers. In addition, each adapter and controller may be combined into a single unit.

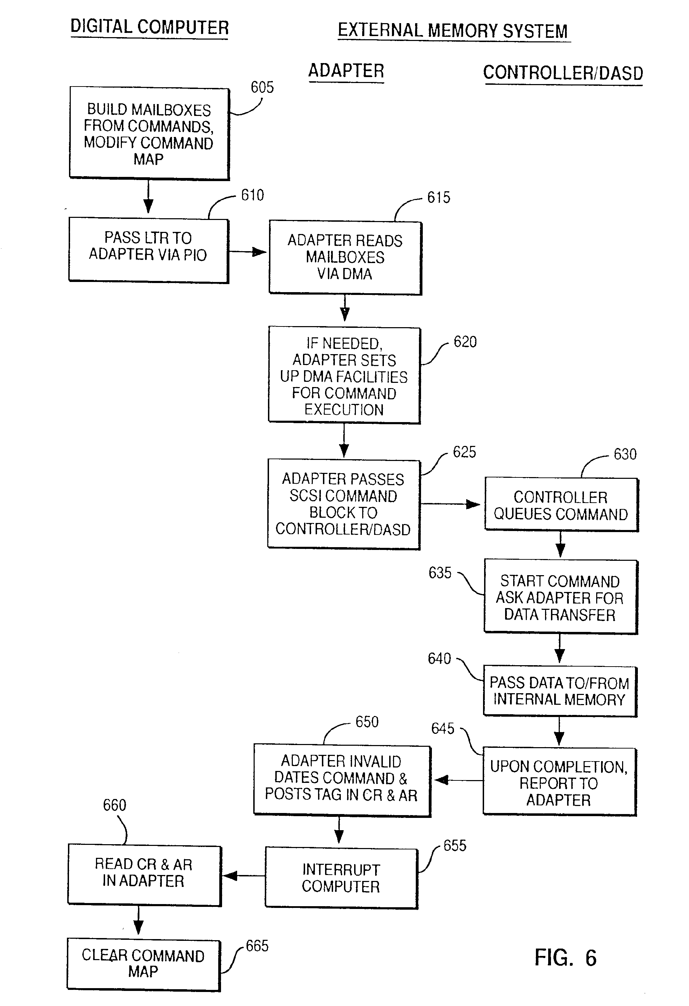

Fig. 6 is a flow chart of a computer system executing a memory system command. In a first step 605, the digital computer processor builds mailboxes in internal memory from commands to be executed by the external memory system. In the preferred embodiment, the processor builds one mailbox per command to be executed. The processor also references each mailbox to be executed in the command map. Once the processor completes building the mailboxes and modifying the command map, the processor then passes the contents of the last tag register to the adapter using a programmed input/output (PIO) command in step 610. The LTR is the tag number of the last mailbox in the linked list of mailboxes that were built by the processor. The adapter then receives the LTR from the processor.

In a third step 615, the adapter then reads the mailboxes in the internal memory using direct memory access (DMA) commands. The adapter reads the mailbox referred to from a previously read mailbox. The adapter then continues reading the linked list of mailboxes until the adapter reads the mailbox that matches the LTR.

In a fourth step 620, the adapter sets up DMA facilities from commands if needed to execute the memory system commands given in the mailboxes.

In a fifth step 625, the adapter passes the SCSI command block to the appropriate controller for execution.

In a sixth step 630, the controller queues the command it receives from the adapter. The controller queue may include commands from other digital computers.

In a seventh step 635, the controller starts the command to be executed by asking the adapter for data transfer capabilities.

In an eighth step 640, the controller then executes the command and passes the necessary data between internal memory and the appropriate DASD.

In a ninth step 645, the controller then reports the status of the execution of the command to the adapter.

In a tenth step 650, the adapter invalidates the command and posts a status tag in the command register and, if necessary, in the alert register.

In an eleventh step 655, the adapter then interrupts the digital computer.

In a twelfth step 660, the digital computer then reads the completion register in the adapter and, if necessary, also reads the alert register.

In a thirteenth step 665, the processor then clears the reference to the just executed command in both the command map and the old command map.

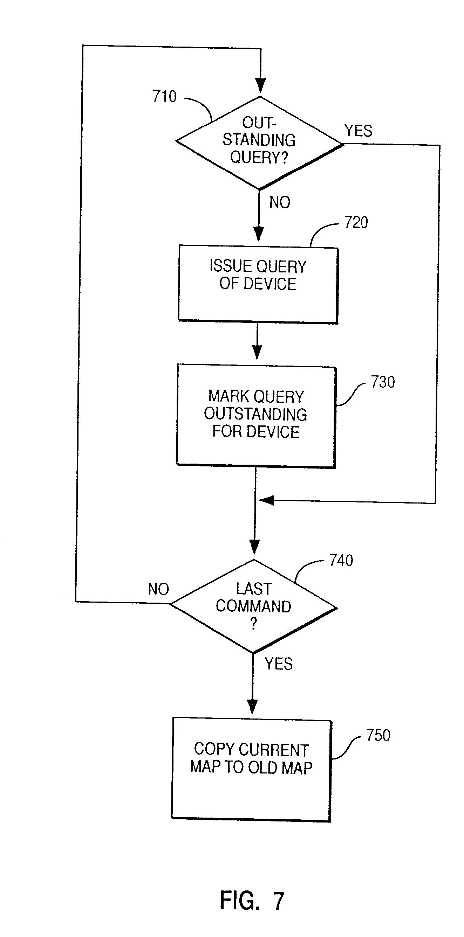

At the expiration of each time interval (nominally one minute in the preferred embodiment), the processor determines whether all commands have been executed on a timely basis. If not, then a query may be issued to the appropriate device to determine whether an error has occurred. A query is a status request command that is issued only for determining the status of a device or previously issued command. Fig. 7 is a flow chart of a digital computer determining whether all previously issued commands have been executed on a timely basis. Each active entry in the old command map in internal memory has been active for at least one minute. For each active entry in the old map, the processor determines whether a query is already outstanding for that device (step 710). If not, a query at the appropriate device is issued by the processor (step 720) and a reference to that device in internal memory is marked as query outstanding (step 730). This may be used to prevent unnecessary multiple queries to the same device. When all entries in the old command map have been tested (step 740), the current command map is copied into the old command map in preparation for the next interval (step 750).

A typical timing regime for commands and queries in a digital computer as discussed above would be as follows. Given a clock with time T, at T = 0 there are no outstanding commands (i.e. the command map and old command map are empty) or queries. At time T = 10s, a first command C1 is given and a copy of that command is stored in the current command map. At time T = 40s, a second command C2 is given and a copy of that command is also stored in the current command map. At time T = 60s, there are no commands in the old command map to query and C1, C2 are then copied into the old command map. At time T = 120s, the contents of the old command map are read and two queries are generated for commands C1 and C2. Thus, the old command map is read at intervals of a predetermined time and queries are sent for commands outstanding for at least that period of time. In the present example, the predetermined length of time between the readings of the old command. map is 60s and queries are generated for commands 80 and 100s old. Providing there is no fault in the memory system, the memory will send a response to each of the queries. In the present example, at time T = 122s a response is received back stating that the commands have not yet been executed. At T = 150s, C1 is executed and the command is erased from the old command memory map. At T = 180s, command C2 still has not been executed (it is now 140s old) and a further query is sent. Thus, a subsequent query is sent a predetermined length of time after the previous query was sent. In the present case, the second query is sent after 60s, the same predetermined length of time as associated with the sending of the first query. Subsequent queries will be sent every 60s until either the command is executed or an error condition occurs.

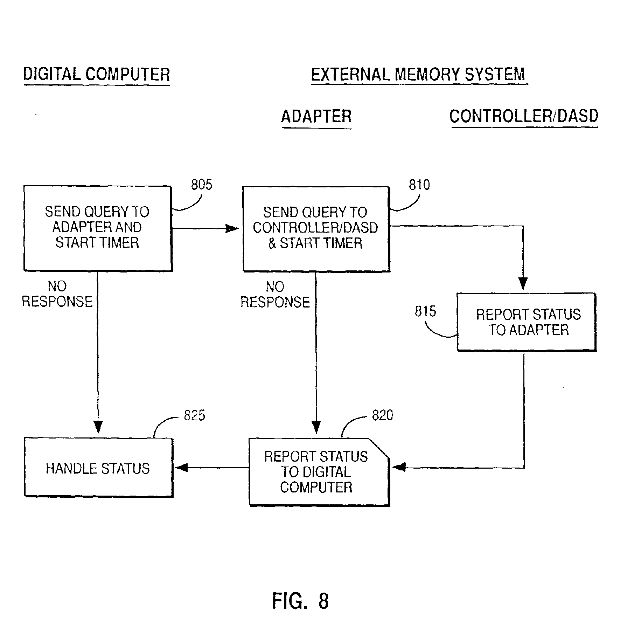

Fig. 8 is a flow chart of a digital computer querying a memory system in a preferred embodiment. In a first step 805, the digital computer processor sends a query to the adapter and starts a timer for time t. Typically, a timer would involve a counter in internal memory in combination with the digital computer clock. Time t is typically two seconds.

In a second step 810, the adapter receives the query and then sends a query to the appropriate controller/DASD and starts a timer for a second time t/2. In the preferred embodiment, both the adapter and the controller/DASD handle queries with a higher priority than commands, including those commands given the priority of head.

In a third step 815, the controller/DASD reports the status of that controller/DASD or the status of the command being queried to the adapter. There are various types of status. The controller/DASD reports that it is suffering from some type of error, that it is functioning properly with no known reason for a delay, or that it is functioning properly but there is a known reason for a delay. Known reasons for delay can include higher priority commands from other digital computers that the controller/DASD is coupled to and exceptionally or unpredictably lengthy operations such as error recovery.

In a fourth step 820, the adapter determines the status of the controller/DASD. If the controller/DASD did not respond within a given time, then the adapter will report that to the digital computer. If the controller/DASD did report its status within the given time, then the adapter will report that status to the digital computer.

If there was a valid reason for delay, the controller responds with clean status and the tag of the query device mailbox is posted in the completion register. Since there is no error involved and the completion register can hold up to four tags at a time, this is a very efficient means to communicate the nonerror condition. If there is no reason for delay, a special code is posted in the completion register and an error status is posted in the alert register. Upon receiving the error, the system may choose to restart or deactivate the appropriate controller or DASD.

In a fifth step 825, the digital computer then determines the status of the adapter and controller/DASDs.

If the adapter did not respond within a given time, then the adapter is in error and the appropriate action is taken. If the status is reported to the digital computer from the adapter, then the digital computer responds to that status appropriately. For example, the digital computer may retry the status query if the adapter or controller/DASD did not respond. The digital computer may also discontinue use of the adapter or controller/DASD. In addition, the digital computer may reboot or clear and restart the appropriate adapter or controller/DASD.

In conclusion, the present invention provides an efficient way for a digital computer to check the status of external memory commands even if the commands may be delayed for unpredictable amounts of time. The delays may be unpredictable due to recovery actions or due to interspersed commands from other digital computers coupled to the memory system. This invention also includes provision for detecting cases where the response to the query exceeds a given time. The present invention also provides for reordering the priority of external memory system commands at the subsystem level without interfering with the timing process of a digital computer. Furthermore, the present invention improves performance because it is unnecessary to start an individual timer for every external memory command.

Although the present invention has been fully described above with reference to specific embodiments, other alternative embodiments will be apparent to those of ordinary skill in the art. For example, the status of the execution of the commands may be stored in the mailboxes in internal memory by the adapter. Therefore, the above description should not be taken as limiting the scope of the present invention which is defined by the appended claims.

## Claims

1. A method for a digital computer to communicate with a memory coupled to said computer comprising the steps of:

    a) sending a command for execution to said memory; and

    b) sending a query to said memory for a status of the execution of said command or a status of the memory to which the command was sent.

2. The method of Claim 1 wherein the step of sending a query occurs at least a predetermined length of time after sending the command.

3. The method of Claim 1 or 2 further comprising the step of receiving a response to said query from said memory.

4. The method of Claim 2 or 3 further comprising the step of sending a subsequent query to said memory a predetermined length of time after the previous query was sent and since the memory responded to the previous query.

5. The method of any preceding Claim further comprising the step of timing the length of time for the memory to respond to said query.

6. The method of Claim 5 further comprising the step of determining whether the memory has responded to said query after at least a predetermined length of time.

7. A method for a digital computer to communicate with a memory coupled to said digital computer comprising the steps of:
    a) sending a query to said memory; and
    b) timing the length of time for the memory to respond to said query.

8. The method of Claim 7 further comprising the step of determining whether the memory has responded to said query after at least a predetermined length of time.

9. The method of Claim 8 further comprising the step of sending a subsequent query to said memory after at least a predetermined length of time since the query was sent to the memory.

10. A computer system comprising:
    a) a memory including means for executing commands; and
    b) means coupled to said memory for sending a command for execution to said memory and for sending a query to said memory for a status of the execution of said command or of said memory to which said command was sent.

11. The computer system of Claim 10 further comprising at least one clock coupled to at least one of the sending means for timing the length of time for the memory to respond to said query.

12. The computer system of Claim 11 wherein the sending means includes means for determining whether the memory has responded to said query after at least a predetermined length of time.

13. The computer system of Claim 11 or 12 wherein the sending means includes means for sending a subsequent query to said memory a predetermined length of time after the previous query was sent and since the memory responded to the previous query.

14. The computer system of Claim 12 wherein the sending means includes means for sending a subsequent query to said memory after determining the memory has not responded to said query after at least a predetermined length of time.

15. A computer system comprising:
    a) a memory including means for executing commands; and
    b) means coupled to said memory for sending a query to said memory; and
    c) a clock coupled to the sending means for timing the length of time for the memory to respond to said query.

16. The computer system of Claim 15 wherein the sending means includes means for determining whether the memory has responded to said query after at least a predetermined length of time.

17. The computer system of Claim 16 wherein the sending means includes means for sending a subsequent query to said memory a predetermined length of time after the previous query was sent and since the memory responded to the previous query.

18. The computer system of Claim 16 or 17 wherein the sending means includes means for sending a subsequent query to said memory after determining the memory has not responded to said query after at least a predetermined length of time.

19. A computer system as claimed in claim 10, wherein said means coupled to said memory further includes a command memory comprising a current command memory holding commands sent from said sending means and an old command memory holding old or outstanding commands sent.

20. A computer system as claimed in claim 19, further comprising a timing means connected to said sending means, wherein said sending means is adapted to read the contents of said old command memory at predetermined intervals of time set by said timing means and to output a query based on the contents of said old command memory.

21. A computer system as claimed in claim 20, wherein said sending means is further adapted to copy the contents of the current command memory into the old command memory after reading the contents of the old memory.

22. A computer system as claimed in any of claims 19 to 21 further comprising a second timing means connected to said sending means, said sending means being adapted to output a further query after a second predetermined interval of time set by said second timing means if a response has not been returned by said memory means.

23. A computer system as claimed in claim 22, further comprising an adapter means for transmitting commands and queries and responses between said sending means and said memory means, said adapter means also comprising a timing means for monitoring the time taken by the memory means to respond to a query.

24. A computer system as claimed in any of claims 10 to 23 comprising at least one digital computer coupled to said memory, the or each digital computer including a said sending means.

100

FIG. 1

INTERNAL MEMORY    140

COMMAND MAP    144

CURRENT
144A

OLD
144B

MAILBOXES    142

| 0 | 1 | 2 | | | | | |
|---|---|---|---|---|---|---|---|
| | | | | | | | |
| | | | | | | | |
| | | | | | | | |
| | | | | | | | |
| | | | | | | | |
| | | | | | | | 127 |

FIG. 2

300

| | 0 | 1 | 2 | 3 |
|---|---|---|---|---|
| 0 | Pointer to Next Mailbox | | | 305 |
| 4 | op code 310 | TAG 315 | Address 320 | QC 325 |
| 8 | DMA Address | | | 330 |
| 12 | DMA Length in bytes | | | 335 |
| 16<br>20<br>24 | SCSI Command Descriptor Block<br>(NOT DEFINED FOR ALL COMMANDS) | | | 340 |
| 28<br>32 | Unused | | | 345 |

FIG. 3

FIG. 4

FIG. 5

**DIGITAL COMPUTER**   **EXTERNAL MEMORY SYSTEM**

**ADAPTER**   **CONTROLLER/DASD**

BUILD MAILBOXES FROM COMMANDS, MODIFY COMMAND MAP — 605

PASS LTR TO ADAPTER VIA PIO — 610

ADAPTER READS MAILBOXES VIA DMA — 615

IF NEEDED, ADAPTER SETS UP DMA FACILITIES FOR COMMAND EXECUTION — 620

ADAPTER PASSES SCSI COMMAND BLOCK TO CONTROLLER/DASD — 625

CONTROLLER QUEUES COMMAND — 630

START COMMAND ASK ADAPTER FOR DATA TRANSFER — 635

PASS DATA TO/FROM INTERNAL MEMORY — 640

ADAPTER INVALIDATES COMMAND & POSTS TAG IN CR & AR — 650

UPON COMPLETION, REPORT TO ADAPTER — 645

READ CR & AR IN ADAPTER — 660

INTERRUPT COMPUTER — 655

CLEAR COMMAND MAP — 665

FIG. 6

FIG. 7

DIGITAL COMPUTER          EXTERNAL MEMORY SYSTEM

ADAPTER          CONTROLLER/DASD

FIG. 8

European Patent
Office

**EUROPEAN SEARCH REPORT**

Application Number

EP 92 30 1255

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 272 547 (HONEYWELL BULL INC.) | 1-3,5-8, 10-12, 15,16,24 | G06F13/42 |
| A | * Abstract * <br> * page 3, line 1 - line 13 * <br> * page 3, line 30 - line 38 * <br> * page 5, line 43 - line 49 * <br> * page 12, line 56 - page 13, line 37 * <br> * page 16, line 45 - page 17, line 21 * <br> * page 18, line 23 - line 27 * <br> * page 19, line 37 - page 20, line 17; figures 2,6 * | 20 | |
| A | EP-A-0 344 999 (KABUSHIKI KAISHA TOSHIBA) <br><br> * Abstract * <br> * column 2, line 49 - column 3, line 20 * <br> * column 4, line 7 - line 19 * <br> * column 4, line 36 - column 5, line 14 * | 1,7,10, 15,23,24 | |
| | ----- | | **TECHNICAL FIELDS SEARCHED (Int. Cl.5)** <br><br> G06F |

The present search report has been drawn up for all claims

| Place of search | Date of completion of the search | Examiner |
|---|---|---|
| THE HAGUE | 10 JUNE 1992 | SEMPLE M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)